# EUROPÄISCHE PATENTANMELDUNG

(11) **EP 1 215 604 A2**
(43) Veröffentlichungstag der Anmeldung: **19.06.2002**
(21) Anmeldenummer: 01129023.6
(22) Anmeldetag: 06.12.2001
(51) Int. Cl.: G06F 17/60

(54) **Verfahren zum Ordern und Versenden von Artikeln**

(30) Priorität: 09.12.2000 DE 10061508
(71) Anmelder: Siemens Dematic AG, 90475 Nürnberg (DE)
(72) Erfinder: Rosenbaum, Walter, Dr., 75116 Paris (FR); Reich, Karl, 78315 Radolfzell (DE)
(74) Vertreter: Berg, Peter

(57) **Zusammenfassung**

Eine elektronisch übermittelte Kauforder wird bei einem online-Anbieter (2) registriert. Daraufhin sendet er an entsprechende Hersteller oder Lieferanten (3) elektronisch eine Bestellung mit Daten für eine Kennung der Kauforder. Nach Erzeugen und/oder Bereitstellen der georderten Artikel in neutraler mit der Kennung versehener Verpackung (3.1) werden sie an ein Service-Center (6) verschickt. Darüberhinaus sendet der online-Anbieter (2) eine elektronische Anweisung zum Drucken entsprechender Etiketten mit der Empfängeranschrift und je nach Anforderung einer Rechnung, eines Lieferscheines sowie von Anschreiben und Informationsschriften im online-Anbieter-Layout mit dafür benötigten digitalen Daten und Daten für die Kennung an ein Druck-Center (4) des Service-Centers (6). Im Service-Center (6) werden die Artikel und die ausgedruckten Unterlagen entsprechend der Kennung zusammengefügt und nach Fertigstellen zum Versand als Pakete (6.1) im online-Anbieter-Layout an den Besteller geschickt.

## Beschreibung

Die Erfindung betrifft ein Verfahren zum Ordern und Versenden von Artikeln, bei dem der Besteller eine Kauforder über ein elektronisches Netz an einen online-Anbieter sendet, der die Kauforder registriert und speichert.

Nach dem Stand der Technik benötigt der online-Anbieter bei einer großen Angebotsbreite ein sehr großes Warenlager, aus dem die bestellten Waren abgerufen, mit Rechnungen, Kundeninformationen, Anschreiben usw. zusammengebracht, verpackt mit Etiketten, die Adreßangaben beinhalten, versehen und dann versandt werden. Die gedruckten Unterlagen, Verpackung und Etiketten sind im Layout des betreffenden online-Anbieters realisiert. Bei einer großen Angebotsbreite ist so ein großes, stets gefülltes Lager sehr aufwendig und benötigt einen erhebliche Geldmittel bindenden Warenbestand, so daß die Wirtschaftlichkeit des online-Anbieters nicht mehr gewährleistet ist.

Um den großen Warenbestand zu reduzieren, werden vom online-Anbieter auf der Basis der eingegangenen Kauforder elektronische Bestellungen bei entsprechenden Herstellern/Lieferanten ausgelöst. Diese produzieren die bestellten Waren dann nach Anforderung oder entnehmen sie einem Lager mit dem begrenzten Lieferprofil. Dann werden die Waren neutral verpackt und an den Besteller beim online-Anbieter versandt. Ein vom online-Anbieter gewünschter Versand mit Rechnungen, Anschreiben, Kundeninformationen, Verpackungen, Etiketten des online-Anbieters in seinem Layout ist vom jeweiligen Hersteller/Lieferanten nicht realisierbar.

Der im Anspruch 1 angegebenen Erfindung liegt daher die Aufgabe zugrunde, ein Verfahren zum Ordern und Versenden von Artikeln mit Hilfe eines online-Anbieters zu schaffen, mit dem kostengünstig die vom Besteller georderten Artikel mit gedruckten Unterlagen, wie z.B. Rechnung, Anschreiben, Informationen usw., und bei Bedarf einer Verpackung im Layout des online-Anbieters an den Besteller ausgeliefert werden können, auch wenn die Artikel nicht beim online-Anbieter selbst am Lager sind.

Erfindungsgemäß werden vom online-Anbieter entsprechend der Kauforder auf elektronischem Wege Druckaufträge zum Drucken von Etiketten und je nach Bedarf von Rechnungen, Anschreiben, Informationsschriften und Verpackungsmaterialien im online-Anbieter-Layout mit dafür benötigten digitalen Daten und mit digitalen Daten für eine Kennung zur Identifizierung der Kauforder an ein Druck-Center eines Service-Centers gesandt. Weiterhin wird vom online-Anbieter entsprechend der Kauforder an einen oder mehrere Hersteller oder Lieferanten eine elektronische Bestellung mit Daten für eine Kennung zur Identifizierung der Kauforder gesandt.

An dieses Service-Center werden von den Herstellern oder Lieferanten die Artikel in neutraler Verpackung, auf der sich die Kennung für die Kauforder befindet, versendet. Nach Erledigung der Druckaufträge werden der oder die Artikel mit den zugehörigen ausgedruckten Unterlagen entsprechend der Kennung zusammengefügt, zum Versand im online-Anbieter-Layout fertiggestellt und an den Besteller versendet.

Vorteilhaft ist es, die Kennung in maschinenlesbarer Form, z.B. als Barcode auf die neutrale Verpackung aufzubringen, so daß die Erkennung mit entsprechenden Barcodelesern schnell und kostengünstig realisiert werden kann. Stattdessen oder zusätzlich kann die Kennung auch durch den Menschen lesbar aufgebracht werden, so daß auch teilautomatische Lösungen realisiert werden können, bzw. ein Betrieb auch ohne Barcodeleser bzw. bei Störungen in den Barcodelesern möglich ist.

Mit dieser Verfahrensweise ist es möglich, beim online-Anbieter georderte Artikel dem Besteller mit Unterlagen, wie Rechnungen, Zusatzinformationen, Anschreiben, Etiketten im online-Anbieter-Layout kostengünstig zukommen zu lassen, d.h. auch wenn die Artikel beim online-Anbieter nicht auf Lager liegen, sondern bei verschiedenen Herstellern/Lieferanten bestellt werden.

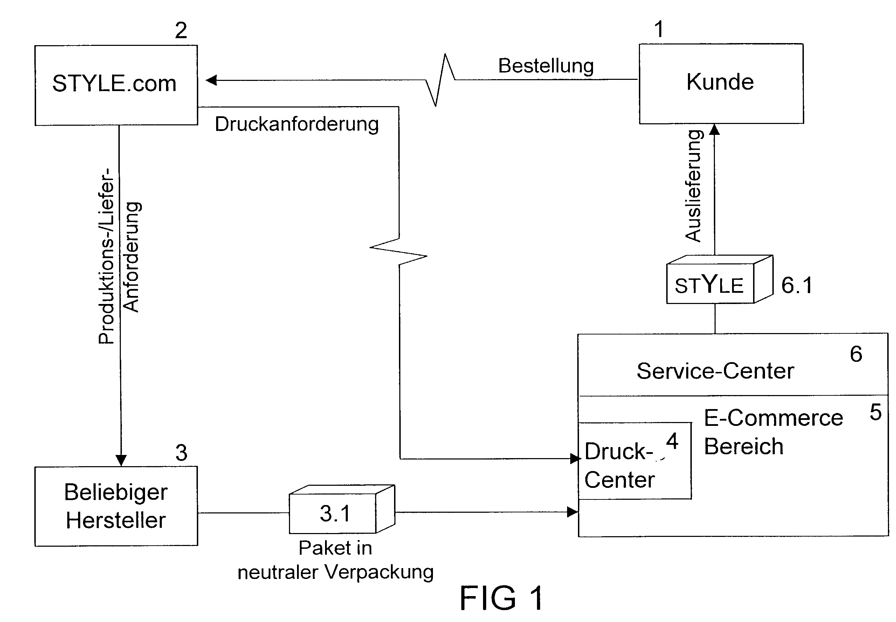

Anschließend wird die Erfindung in einem Ausführungsbeispiel näher erläutert.
Dabei zeigt
- FIG 1: den Verfahrensablauf in schematischer Darstellung

Gemäß FIG 1 gibt der Besteller bzw. Kunde 1 an seinem Internet-Zugang (PC) eine Kauforder auf und sendet sie an einen online-Anbieter 2 mit dem Namen STYLE.com. Dort wird die Kauforder unter Vergabe einer Kennung registriert und gespeichert. Dann wird an ein Druck-Center 4 eines Service-Centers 6 mit einem E-Commerce Bereich 5 ein Druckauftrag zum schnellen Laser-Farbdrucken eines oder mehrerer Etiketten des online-Anbieters 2 mit der Empfängeranschrift, je nach Bedarf einer Rechnung, eines Lieferscheines sowie von Anschreiben und Informationsschriften sowie entsprechendem Packpapier im Layout des online-Anbieters 2 über ein elektronisches Netz gesendet. Die hierfür benötigten digitalen Daten sowie die digitalen Daten für die Kennung der Kauforder sind in dem elektronischen Druckauftrag mit enthalten.

Die auf einem schnellen Farblaserdrucker ausgedruckten Unterlagen werden dann in Transportbehälter gesteckt, die den Kennungen zugeordnet sind. Dabei können die Transportbehälter die jeweiligen Kennungen als Barcode und in für den Menschen lesbarer Form aufweisen, oder sie besitzen feste Nummern (wiederverwendbare Transportbehälter), denen die Kennungen mit Hilfe eines Displays zuzuordnen sind.

Neben dem Druckauftrag wird von dem online-Anbieter 2 auch ein elektronischer Bestellvorgang bei einem oder mehreren Herstellern oder Lieferanten 3 ausgelöst. Diese Bestellung enthält ebenfalls Daten für die Kennung der Kauforder. Nach dem Erzeugen oder Bereitstellen des oder der Artikel werden sie neutral verpackt, wobei die Verpackung mit der Kennung in Barcodeform und in lesbarer Form versehen ist. Das neutral verpackte Paket 3.1 wird entsprechend adressiert an das Service-Center 6 mit dem E-Commerce Bereich 5 geschickt. Dort werden anhand der Kennungen die ausgedruckten Unterlagen den Artikeln zugeordnet und es erfolgt die Fertigstellung für den Versand, d.h. die Druckmaterialien werden beigelegt, die endgültige Verpackung erfolgt, ggf. in entsprechendem online-Anbieter-Packpapier und die Anbieter-Etiketten mit den Empfängeradressen werden aufgebracht. Schließlich werden das oder die Pakete 6.1 gemäß der Kauforder an den Besteller (Auslöser der Kauforder) verschickt.

## Patentansprüche

1. Verfahren zum Ordern und Versenden von Artikeln, bei dem der Besteller (1) eine Kauforder über ein elektronisches Netz an einen online-Anbieter (2) sendet, der die Kauforder registriert und speichert, mit den Schritten:
- Übermitteln einer Bestellung durch den online-Anbieter (2) entsprechend der Kauforder über ein elektronisches Netz an einen oder mehrere Hersteller oder Lieferanten (3) mit Daten für eine Kennung zur Identifizierung der Kauforder, bei welcher ein Service-Center (6) als Lieferort angegeben ist,
- Erzeugen und/oder Bereitstellen des oder der georderten Artikel in einer neutralen, mit der Kennung versehenen Verpackung und Verschicken an das Service-Center (6),
- Senden einer Anweisung zum Drucken eines oder mehrerer Etiketten des online-Anbieters mit der Empfängeranschrift, je nach Anforderung einer Rechnung, eines Lieferscheines sowie von Anschreiben, von Informationsschriften und von Packpapier im online-Anbieter-Layout über ein elektronisches Netz an ein Druck-Center (4) als Bestandteil des Service-Centers (6) gemäß der Kauforder mit dafür benötigten digitalen Daten und mit digitalen Daten für die Kennung zur Identifizierung der Kauforder,
- Zusammenfügen des oder der Artikel im Service-Center (6) mit den zugehörigen ausgedruckten Unterlagen nach der Kennung, Fertigstellen zum Versand im online-Anbieter-Layout und Versand des oder der Pakete (6.1) vom Service-Center (6) an den Besteller (1).

2. Verfahren nach Anspruch 1, wobei die Kennung der Kauforder in maschinenlesbarer und/oder in durch den Menschen lesbarer Form auf dem Umschlag mit den gedruckten Unterlagen und der neutralen Versandverpackung des Herstellers/Lieferanten (3) aufgebracht wird.
